# EUROPÄISCHE PATENTSCHRIFT

(11) **EP 0 910 202 B1**
(45) Veröffentlichungstag und Bekanntmachung des Hinweises auf die Patenterteilung: **17.01.2007**
(21) Anmeldenummer: 98116151.6
(22) Anmeldetag: 27.08.1998
(51) Int. Cl.: H04M 9/00, H04M 3/42

(54) **Verfahren zum Aufbau einer Wechselsprechanlagen-Verbindung sowie Anordnung**
Method for establishing an intercom connection and device
Méthode pour établir une connexion d'interphone et dispositif

(30) Priorität: 16.10.1997 DE 19745798
(43) Veröffentlichungstag der Anmeldung: 21.04.1999
(73) Patentinhaber: Tenovis GmbH & Co. KG, 60362 Frankfurt am Main (DE)
(72) Erfinder: Buehler, Udo, 73066 Uhingen (DE); Halfmann, Joerg, 68163 Mannheim (DE)
(74) Vertreter: Tergau & Pohl Patentanwälte

(56) Entgegenhaltungen:
- DE-A- 3 807 358
- TOLKIEHN: "Offene Systeme für Computertelefonie - Gemeinsame Basis gesucht" GATEWAY, Bd. 10, 1996, Seiten 30-39, XP001118415

## Beschreibung

### Stand der Technik

Die Erfindung geht aus von einem Verfahren zum Aufbau einer Gegen- oder Wechselsprechanlagen-Verbindung von einem Endgerät einer Fernsprechanlage aus.

Aus der DE 38 07 358 C2 ist ein Verfahren zum Steuern einer Wechselsprechanlage bekannt. Zum Verbindungsaufbau innerhalb der Wechselsprechanlage sind dort die zum direkten Aufbau von Fernsprechverbindungen dienenden Zielwahltasten benutzbar. Die Wechselsprechanlage ist über Schnittstellen direkt an die Kommunikations-Vermittlungsanlage, z.B. eine Makler-Vielfachanlage angeschlossen. Steuerbefehle für den Verbindungsaufbau innerhalb der Wechselsprechanlage werden über Endgeräte der Kommunikations-Vermittlungsanlage eingegeben und von der zentralen Steuereinrichtung dieser Vermittlungsanlage direkt zur Wechselsprechanlage weitergegeben.

Mit Sondertasten der Wähltastur eines Endgeräts der Kommunikations-Vermittlungsanlage können Steuersignale für den Betrieb der Wechselsprechanlage übertragen werden.

### Vorteile der Erfindung

Mit den Maßnahmen der Erfindung gemäß den Patentansprüchen werden benutzerabhängige Gegen- oder Wechselsprechanlagen-Verbindungen ermöglicht. Unabhängig davon, an welchem Endgerät der Fernsprechanlage sich ein Benutzer einloggt, wird ein mittels seiner Fernsprechanlagen-User-Rufnummer eingeleiteter Gegen- oder Wechselsprechanlagen-Verbindungswunsch zu der ihm physikalisch zugehörigen Gegen- oder Wechselsprechstelle geroutet. Die Erfindung ist insbesondere bei Maklervielfachplätzen einsetzbar, wo sowohl Endgeräte einer Fernsprechanlage als auch davon unabhängig Endgeräte einer Gegen- oder Wechselsprechanlage vorgesehen sind. Bei der Erfindung müssen keine Zielwahltasten für den Verbindungsaufbau innerhalb der Gegen- oder Wechselsprechanlage benutzt werden. Ein Makler kann unabhängig vom benutzten Arbeitsplatz durch seine Fernsprechanlagen-User-Rufnummer den Gegen- oder Wechselsprechanlagen-Verbindungswunsch initiieren. Es erfolgt dann automatisch die Weiterleitung des Verbindungswunsches zur richtigen Gegen- oder Wechselsprechstelle.

Die Erfindung läßt sich auf einfache Weise in bestehenden Anlagen nachrüsten. Eingeführte Gegen- oder Wechselsprechanlagen, z.B. Inhouse-Wechselsprechanlagen, z.B. Interkom- oder Stentofonanlagen mit eigener Vermittlungseinrichtung, Verkabelung und Sprechstellen verfügen zur Kommunikation mit anderen Systemen über eine V24-Schnittstelle. Diese Schnittstelle kann benutzt werden, um Wechselsprechanlagen-Verbindungen auf- und abzubauen. Die von den Endgeräten der Fernsprechanlage abgebenen Wahl- und Steuerinformationen, die für die Wechselsprechanlage bestimmt sind, werden von der Vermittlungseinrichtung der Fernsprechanlage zu einer Umsetzeinrichtung, beispielsweise einem Personalcomputer, geschickt. Dort erfolgt die Umbewertung der nutzerspezifischen Rufnummern in Steuerbefehle für die Wechselsprechanlage. Außerdem erfolgt dort die Anpassung der Wahl- und Steuerinformationen an das vom jeweiligen Wechselsprechsystem benötigte Übertragungsprotokoll. Selbst unterschiedliche Wechselsprechsysteme können Personalcomputer-Applikation unterstützt werden. Je nach der in der Personalcomputer-Applikation getroffenen Voreinstellung wird eines von mehreren Übertragungsprotokollen unterstützt.

### Zeichnung

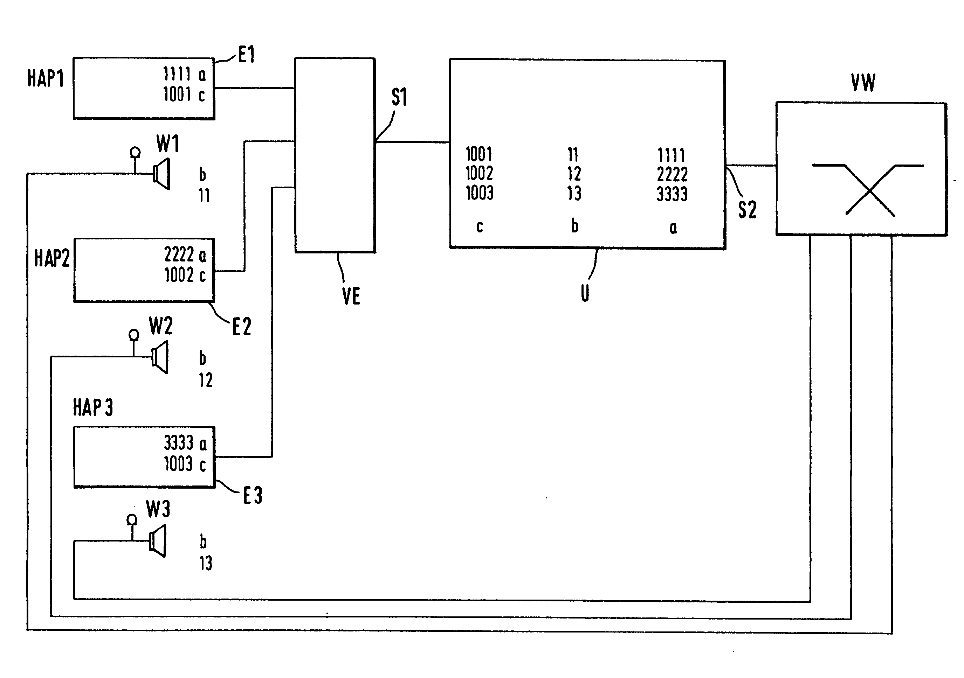

Anhand der Zeichnung werden Ausführungsbeispiele der Erfindung erläutert. Diese zeigt ein Übersichtsschaubild der Integration von Fernsprechanlagen und Gegen- oder Wechselsprechanlagen.

### Beschreibung von Ausführungsbeispielen

In der Figur sind Makler-Vielfachplätze, sogenannte Händler-Arbeitsplätze, HAP1, HAP2, HAP3, ... vorgesehen, mit Endgeräten E1, E2, E3 einer Fernsprechanlage und zugehöriger Vermittlungseinrichtung VE sowie Endgeräten W1, W2, W3 einer Gegen- oder Wechselsprechanlage mit zugehöriger eigener Vermittlungseinrichtung VW. Auf die speziellen Bedienprozeduren, wie sie bei solchen Bedien- oder Abfrageplätzen - Händlerplätzen - üblich sind, soll hier nicht näher eingegangen werden. Solche Merkmale sind beispielsweise der Zeitschrift "TN Nachrichten" 1987, Heft 91, Seiten 20 bis 28 oder dem Prospekt der Bosch Telecom "Das ISDN-Händlersystem Integral 33x, Globale Kommunikation für Finanzmärkte" zu entnehmen.

Bei den für die Realisierung der Erfindung möglichen Wechselsprechanlagensystemen Intercom und Stentofon handelt es sich um Systeme zweier Hersteller, die sich in der technischen Ausführung unterscheiden. Beides sind Inhouse-Kommunikationssysteme mit eigener Vermittlungseinrichtung VW, Verkabelung und Sprechstellen W1, W2, W3. Der Verbindungsaufbau und -abbau geschieht bei diesen Systemen durch Betätigen von Tasten, die in die Sprechstellen integriert sind. Außerdem besteht die Möglichkeit mittels einer V24-Schnittstelle mit anderen Systemen zu kommunizieren. Diese Schnittstelle wird benutzt, um Wechselsprechanlagen-Verbindungen auf- und abzubauen. Dazu sind Meldungen im benötigten Format über die V24-Schnittstelle an die Wechselsprechanlagen zu schicken.

An den Händler- Arbeitsplätzen sind sowohl die zur PABX (Fernsprech- bzw. Nebenstellen)-Händleranlage gehörenden Endgeräte (vgl. vorgenannten Prospekt "Das ISDN-Händlersystem Integral 33x") z.B. TH93D, als auch Intercom/Stentofon-Sprechstellen vorhanden. Beide Systeme sind vermittlungstechnisch und auch bezüglich der Hardware vollkommen unabhängig voneinander. Wechselsprechanlagen-Verbindungen mußten bisher von den Intercom/Stentofon-Sprechstellen initiiert werden, die sonstigen Intern- oder Extern-Verbindungen über ein Endgerät, z.B. TH93D.

Bei der Erfindung ist das Auf- und Abbauen einer Wechselsprechanlagen-Verbindung von den Endgeräten E1, E2, E3 der Fernsprechanlage aus möglich, d.h. die Sprechstellentasten der Wechselsprech- Endgeräte W1, W2, W3 müssen hierzu nicht mehr betätigt werden. Das Anwählen eines Wechselsprechteilnehmers von einem Endgerät E1, E2, E3 der Fernsprechanlage aus ist sowohl über dessen Wechselsprech-Rufnummer, als auch über die PABX-Rufnummer möglich. Damit sind benutzerabhängige Wechselsprechanlagen-Verbindungen realisierbar. Unabhängig davon, an welchem Endgerät E1, E2, E3 sich ein Händler einloggt, wird ein mittels seiner nutzerspezifischen Rufnummer, d.h. seiner PABX-User-Rufnummer, eingeleiteter Wechselsprechanlagen-Verbindungswunsch zu der physikalisch zugehörigen Wechselsprechstelle weitergeleitet (geroutet). Dies wird dadurch realisiert, daß Wahl- und Steuerinformationen vom benutzten Endgerät E1 bis E3 nach entsprechender Umsetzung und Bewertung zur Vermittlungssteuerung VW der Gegen- oder Wechselsprechanlage übertragen werden. Pro Fernsprechanlage/Nebenstellenanlage PABX wird nur eines der Wechselsprechsysteme unterstützt. Das bedeutet, daß beispielsweise nicht gleichzeitig ein Intercom- und ein Stentofon-System unterstützt werden.

Die Rufnummernpläne der Wechselsprechanlagen und der PABX sind geschlossen, d.h. daß jede Rufnummer nur einmal vorkommt und eine Wahlbewertung möglich ist.

Die Endgeräte E1, E2, E3, z.B. Endgeräte vom Typ TH93D, erlauben das Absetzen von Wahl- und Steuerinformationen, die für eine Wechselsprechanlage bestimmt sind. Diese Wahl- und Steuerinformationen werden mittels der in CSTA (Computer Supported Telecommunications Applications, ECMA Standardazing Information and Communication Services, ECMA-179, Juni 1992) definierten I/O-Services übertragen. Die Vermittlungseinrichtung VE muß natürlich in der Lage sein, die in CSTA definierten I/O-Services, z.B. "Fast Data" zu unterstützen. Über die Schnittstelle S1 der Vermittlungseinrichtung VE, z.B. eine D-Kanal Schnittstelle, erfolgt die Übertragung der Wahl- und Steuer-Informationen, die für die Wechselsprechanlage bestimmt sind, zur Umsetzeinrichtung U, die als Personalcomputer ausgebildet sein kann. Die Verbindung von der Umsetzeinrichtung U bzw. vom Personalcomputer zur Vermittlungseinrichtung VW der Wechselsprechanlage erfolgt über die Schnittstelle S2, z.B. eine V24-Schnittstelle mit systemspezifischem Protokoll. In der Umsetzeinrichtung U bzw. dem Personalcomputer erfolgt die Anpassung der mittels I/O-Services von den Endgeräten E1 bis E3 erhaltenen Wahl- und Steuerinformationen an das vom Wechselsprechsystem benötigte Protokoll. Die Personalcomputer-Applikation muß also in der Lage sein, die beispielsweise vom Endgerät TH93D erhaltenen Daten sowohl in das Intercom- als auch in das Stentofon-Protokoll zu wandeln. Das an der V24-Schnittstelle S2 zur Verfügung gestellte Protokoll ist abhängig von der in der Personalcomputer-Applikation getroffenen Voreinstellung. Die Applikation unterstützt nicht beide Protokolle zur gleichen Zeit.

In der Figur sind Beispiele für nutzerindividuelle Rufnummern a, z.B. 1111, 2222 und 3333, Wechselsprechanlagen-Rufnummern b, z.B. 11, 12, 13 und physikalische, d.h. gerätespezifische Rufnummern c, z.B. 1001, 1002, 1003 eingetragen. Die Umbewertung dieser Rufnummern in Steuerbefehle für die Vermittlungseinrichtung VW der Gegen- oder Wechselsprechanlage übernimmt die Umsetzungseinrichtung U bzw. der Personalcomputer. Die Zuordnung zwischen den physikalischen Rufnummern und den Wechselsprechanlagenrufnummern ist hierbei fest vorgegeben. Die nutzerindividuelle Rufnummer ist jedoch frei und muss, je nachdem wo sich der Benutzer einloggt, mit der physikalischen Rufnummer bzw. der Wechselsprechanlagenrufnummer verküpft werden. Wenn ein Benutzer z.B. den Arbeitsplatz HAP3 erreichen will, wird von der Umsetzeinrichtung U die nutzerindividuelle Rufnummer, z.B. 1111 oder 2222 der Wechselsprechanlagenrufnummer 13 zugeordnet.

## Patentansprüche

1. Verfahren zum Aufbau von Gegen- und Wechselsprechanlagen-Verbindungen zwischen Gegen- und Wechselsprechstellen (W1, W2, W3) einer Gegen- und Wechselsprechanlage über eine Vermittlungseinrichtung (VW) der Gegen- und Wechselsprechanlage, wobei zum Aufbau einer Gegen- und Wechselsprechanlagen-Verbindung die Gegen- und Wechselsprechstelle über ein Endgerät (E1, E2, E3) einer Fernsprechanlage mithilfe einer Rufnummer angewählt wird,
**dadurch gekennzeichnet, dass**
die Rufnummer eine nutzerspezifische Rufnummer (a) ist, um eine nutzerabhängige Gegen- und Wechselsprechanlagen-Verbindung zu realisieren, wobei mittels einer der Vermittlungseinrichtung (VW) vorgeschalteten Umsetzungseinrichtung (U) die nutzerspezifische Rufnummer (a) mit der physikalischen Rufnummer (c) bzw. der Gegen- und WechselsprechanlagenRufnummer (b) der Gegen- und Wechselsprechstelle verknüpft wird, um den mittels der nutzerspezifischen Rufnummer von einem Endgerät (E1, E2, E3) der Fernsprechanlage aus eingeleiteten Gegen- oder Wechselsprechanlagen-Verbindungswunsch unabhängig davon, von welchem Endgerät aus der Verbindungswunsch initiiert wurde, zu der dem Nutzer zugeordneten Gegen- und Wechselsprechstelle (W1, W2, W3) zu leiten, indem Wahl- und Steuerinformationen vom Endgerät (E1, E2, E3) nach entsprechender Rufnummernumsetzung zur Vermittlungseinrichtung (VW) der Gegen- oder Wechselsprechanlage übertragen werden.

2. Verfahren nach Anspruch 1, **dadurch gekennzeichnet, dass** für die nutzerspezifische Rufnummern (a) und für die physikalischen Rufnummern (c) bzw. die Gegen- und Wechselsprechanlagen-Rufnummern (b) der Gegen- und Wechselsprechstellen geschlossene Rufnummernpläne verwendet werden, d.h. jede Rufnummer nur einmal vorkommt und eine Wahlbewertung möglich ist.

3. Anordnung zum Durchführen des Verfahrens nach Anspruch 1 oder 2, bestehend aus
einer Fernsprechanlage mit einer Vermittlungseinrichtung (VE) und zugehörigen Endgeräten (E1, E2, E3),
einer Gegen- oder Wechselsprechanlage mit einer Vermittlungseinrichtung (VW) und zugehörigen Gegen- oder Wechselsprechstellen (W1, W2, W3),
einer Umsetzungseinrichtung (U) zwischen der Vermittlungseinrichtung (VE) der Fernsprechanlage und der Vermittlungseinrichtung (VW) der Gegen- oder Wechselsprechanlage zur Verknüpfung von nutzerspezifischen Rufnummern mit physikalischen Rufnummern (c) bzw. Gegen- und Wechselsprechanlagen-Rufnummern (b) der Gegen- und Wechselsprechstellen, um den mittels der nutzerspezifischen Rufnummer von einem Endgerät (E1, E2, E3) der Fernsprechanlage aus eingeleiteten Gegen- oder Wechselsprechanlagen-Verbindungswunsch unabhängig davon, von welchem Endgerät aus der Verbindungswunsch initiiert wurde, zu der dem Nutzer zugeordneten Gegen- oder Wechselsprechstelle (W1, W2, W3) zu leiten, indem Wahl- und Steuerinformationen vom Endgerät (E1, E2, E3) nach entsprechender Rufnummernumsetzung zur Vermittlungseinrichtung (VW) der Gegen- oder Wechselsprechanlage übertragen werden.

4. Anordnung nach Anspruch 3, **dadurch gekennzeichnet, dass** die Fernsprechanlage derart ausgebildet ist, dass sie die in CSTA, Computer Supported Telecommunications Applications, definierten I/O-Services zur Datenübertragung unterstützt.

5. Anordnung nach Anspruch 3 oder 4, **dadurch gekennzeichnet, daß** die Umsetzungseinrichtung (U) aus einem Personalcomputer besteht, der insbesondere über eine V24-Schnittstelle das für die jeweils angeschlossene Gegen- und Wechselsprechanlage benutzte Protokoll aufbereitet und überträgt.

## Claims

1. Method for setting up duplex and simplex system connections between duplex and simplex stations (W1, W2, W3) of a duplex and simplex system via a switching device (VW) of the duplex and simplex system, whereby the duplex and simplex station is dialled up via a terminal device (E1, E2, E3) of a telephone system with the aid of a telephone number in order to set up a duplex and simplex system connection,
**characterized in that**
the telephone number is a user-specific telephone number (a) in order to implement a user-dependent duplex and simplex system connection, whereby the user-specific telephone number (a) is linked to the physical telephone number (c) or the duplex and simplex system telephone number (b) by means of a conversion device (U) connected upstream of the switching device (VW) in order to forward the duplex or simplex system connection request initiated from a terminal device (E1, E2, E3) of the telephone system by means of the user-specific telephone number, regardless of the terminal device from which the connection request was initiated, to the duplex and simplex station (W1, W2, W3) assigned to the user, **in that** dialling and control information is transmitted from the terminal device (E1, E2, E3) following corresponding telephone number conversion to the switching device (VW) of the duplex or simplex system.

2. Method according to Claim 1, **characterized in that** closed telephone number plans are used for the user-specific telephone numbers (a) and for the physical telephone numbers (c) or the duplex and simplex system telephone numbers (b) of the duplex and simplex stations, i.e. each telephone number occurs once only and a selection code analysis is possible.

3. Arrangement to carry out the method according to Claim 1 or 2, comprising
a telephone system with a switching device (VE) and associated terminal devices (E1, E2, E3),
a duplex or simplex system with a switching device (VW) and associated duplex or simplex stations (W1, W2, W3), a conversion device (U) between the switching device (VE) of the telephone system and the switching device (VW) of the duplex or simplex system to link user-specific telephone numbers with physical telephone numbers (c) or duplex and simplex system telephone numbers (b) of the duplex and simplex stations in order to forward the duplex or simplex system connection request initiated from a terminal device (E1, E2, E3) of the telephone system by means of the user-specific telephone number regardless of the terminal device from which the connection request was initiated, to the duplex or simplex station (W1, W2, W3) assigned to the user, in that dialling and control information is transmitted from the terminal device (E1, E2, E3) following corresponding telephone number conversion to the switching device (VW) of the duplex or simplex system.

4. Arrangement according to Claim 3, **characterized in that** the telephone system is designed in such a way that it supports the I/O services for data transmission defined in CSTA, Computer Supported Telecommunications Applications.

5. Arrangement according to Claim 3 or 4, **characterized in that** the conversion device (U) comprises a personal computer which, in particular, processes and transmits the protocol used for the respectively connected duplex and simplex system via a V24 interface.

## Revendications

1. Procédé d'établissement de connexions entre des interphones (W1, WE, W3) d'une installation d'interphones par le biais d'un commutateur (VW) de l'installation d'interphones, l'interphone étant sélectionné par un terminal (E1, E2, E3) d'une installation téléphonique au moyen d'un numéro d'appel pour établir une connexion dans une installation d'interphones.
**caractérisé en ce que** le numéro d'appel est un numéro d'appel (a) spécifique à un utilisateur pour établir une connexion dépendant de l'utilisateur dans une installation d'interphone, le numéro d'appel (a) spécifique à un utilisateur étant combiné au numéro d'appel physique (c) ou au numéro d'appel (b) de l'interphone dans l'installation d'interphones au moyen d'un dispositif de conversion (U) monté en amont du commutateur afin de diriger la connexion souhaitée dans une installation d'interphones, qui a été demandée au moyen du numéro d'appel spécifique de l'utilisateur depuis un terminal (E1, E2, E3) de l'installation téléphonique, vers l'interphone (W1, W2, W3) associé à l'utilisateur, et ce indépendamment du terminal qui a souhaité la connexion, en transmettant des informations de commande et de sélection du terminal (E1, E2, E3) vers le commutateur (VW) de l'installation d'interphones après une conversion de numéro de téléphone correspondante.

2. Procédé selon la revendication 1, **caractérisé en ce que** l'on utilise des plans de numéros d'appel fermés pour les numéros d'appel (a) spécifiques à l'utilisateur et pour les numéros d'appel physiques, (c) ou les numéros d'appel (b) des interphones dans des installations d'interphones, c'est-à-dire que chaque numéro d'appel ne se présente qu'une seule fois et qu'une estimation par sélection est possible.

3. dispositif destiné à mettre en oeuvre le procédé de la revendication 1 ou 2, constitué
d'une installation téléphonique comportant un commutateur (VE) et des terminaux associés (E1, E2, E3),
d'une installation d'interphones comportant un commutateur (VW) et des interphones associés (W1, W2, W3),
d'un dispositif de conversion (U) entre le commutateur (VE) de l'installation téléphonique et le commutateur (VW) de l'installation d'interphones pour combiner des numéros d'appel spécifiques à un utilisateur avec des numéros physiques (c) respectivement des numéros d'appel (b) des interphones dans une installation d'interphones afin de diriger la connexion souhaitée dans une installation d'interphones, qui a été demandée au moyen du numéro d'appel spécifique de l'utilisateur depuis un terminal (E1, E2, E3) de l'installation téléphonique, vers l'interphone (W1, W2, W3) associé à l'utilisateur, et ce indépendamment du terminal qui a souhaité la connexion, en transmettant des informations de commande et de sélection du terminal (E1, E2, E3) vers le central téléphonique (VW) de l'installation d'interphones après une conversion de numéro de téléphone correspondante.

4. Dispositif selon la revendication 3, **caractérisé en ce que** l'installation téléphonique est conformée de façon à permettre des services I/O définis dans des CSAT, Computer Supported Telecommunications Applications, en vue de la transmission de données.

5. dispositif selon la revendication 3 ou 4, **caractérisé en ce que** le dispositif de conversion (U) est constitué d'un ordinateur personnel qui prépare et transmet, notamment par le biais d'une interface V24, le protocole utilisé pour l'installation d'interphones raccordée respectivement.
